(19) **Europäisches Patentamt**

**European Patent Office**

**Office européen des brevets**

(11) **EP 0 832 017 B1**

(12) **EUROPÄISCHE PATENTSCHRIFT**

(45) Veröffentlichungstag und Bekanntmachung des Hinweises auf die Patenterteilung:
**27.09.2000 Patentblatt 2000/39**

(51) Int Cl.⁷: **B60T 8/00**

(21) Anmeldenummer: **96922015.1**

(22) Anmeldetag: **18.06.1996**

(86) Internationale Anmeldenummer:
**PCT/EP96/02638**

(87) Internationale Veröffentlichungsnummer:
**WO 97/00799 (09.01.1997 Gazette 1997/03)**

(54) **VERFAHREN ZUR VERBESSERUNG DES REGELVERHALTENS EINES BLOCKIERSCHUTZREGELUNGSSYSTEMS**

METHOD OF CONTROL FOR IMPROVING THE BEHAVIOUR OF AN ANTI-LOCK SYSTEM

PROCEDE D'AMELIORATION DE LA REGULATION D'UN SYSTEME ANTIBLOCAGE

(84) Benannte Vertragsstaaten:
**DE FR GB**

(30) Priorität: **22.06.1995 DE 19522632**

(43) Veröffentlichungstag der Anmeldung:
**01.04.1998 Patentblatt 1998/14**

(73) Patentinhaber: **Continental Teves AG & Co. oHG 60488 Frankfurt (DE)**

(72) Erfinder:
• **BATISTIC, Ivica**
  **D-60385 Frankfurt am Main (DE)**
• **FENNEL, Helmut**
  **D-65812 Bad Soden (DE)**
• **BÜTTNER, Hans-Joachim**
  **D-35644 Hohenahr (DE)**

(56) Entgegenhaltungen:
**EP-A- 0 363 959       DE-A- 3 939 069**
**DE-A- 4 109 925       DE-A- 4 141 877**

**Beschreibung**

Die Erfindung bezieht sich auf ein Verfahren zur Verbesserung des Regelverhaltens eines Blockierschutzregelungssystems (ABS), insbesondere der Lenkbarkeit des Fahrzeugs und der Fahrstabilität während einer Kurvenfahrt, bei dem das Drehverhalten der Fahrzeugräder gemessen und zur Bestimmung einer Fahrzeugreferenzgeschwindigkeit, die als Bezugsgröße zur Ermittlung des Radschlupfes und zur Bremsdruckmodulation dient, ausgewertet wird und bei dem aus dem Radschlupf der einzelnen Räder Kriterien für eine Kurvenfahrterkennung und für die Erkennung der Richtung der Kurve abgeleitet werden.

Aus der DE 34 13 738 C2 ist bereits ein Blockierschutzregelungssystem (ABS) mit einer Kurvenfahrterkennungsschaltung, die ebenfalls auf der Radschlupfmessung beruht, bekannt. Zur Kurvenfahrterkennung werden die Schlupfwerte an den Rädern einer Fahrzeugseite addiert, mit der Schlupfsumme der Räder der anderen Fahrzeugseite verglichen und ein Kurvenfahrterkennungssignal erzeugt, sobald die Differenz der Schlupfsummen einen vorgegebenen Grenzwert überschreitet. Bei Kurvenfahrterkennung werden dann Auswahlkriterien, wie "Select-low" oder "Select-high", nach denen der Druckverlauf in den einzelnen Bremsdruckregelkanälen dieser Bremsanlage geregelt wird, und Grenzwerte für das Wirksamwerden dieser Auswahlkritierien variiert. Auf diese Weise soll die Regelung den unterschiedlichen Bedingungen während einer Geradeausfahrt und während einer Kurvenfahrt angepaßt werden. Es wird z.B. erreicht, daß bei einer Bremsanlage mit diagonaler Aufteilung der Bremskreise bei Kurvenfahrterkennung die Vorderräder in beiden Diagonalen die Führung des Bremsdruckverlaufs übernehmen. Es stellt sich am kurvenäußeren Rad, das (bei homogenen Straßenverhältnissen) am stärksten belastet wird, die maximal mögliche Kraftschlußanstrengung ein, selbst wenn dadurch das kurveninnere Hinterrad überbremst und in die Blockade geführt würde. Das von dem kurveninneren Rad geführte kurvenäußere Hinterrad liefert einen besonders hohen Beitrag zur Seitenführung des Fahrzeugs und damit zur Fahrstabilität.

In der DE 41 41 877 A1 ist ein Steuersystem für die Verteilung der Bremskräfte auf die rechten und linken Räder eines Kraftfahrzeugs beschrieben, bei dem in der Kurve mit Hilfe von Fluiddruck-Steuerventilen der kritische Fluiddruck des kurvenäußeren Rades auf einen höheren Pegel als der kritische Druck des kurveninneren Rades gesetzt wird. Auf diese Weise soll ein Übersteuern des Fahrzeugs selbst dann verhindert werden, wenn an die Räder mittlere Bremskräfte angelegt werden und dabei auf die Karosserie eine verhältnismäßig große Querbeschleunigung ausgebt wird.

Aus der älteren DE 21 19 590 A1 ist es auch bereits bekannt, ein Kurvenfahrterkennungssignal mit Hilfe eines Querbeschleunigungsmeßgerätes, wie eines Quecksilberschalters, zu gewinnen .

Die vorliegende Erfindung zielt ebenfalls auf die Verbesserung der Regelung eines Blockierschutzregelungssystems (ABS) durch Anpassung der Regelung an die unterschiedlichen Bedingungen während einer Geradeaus- und einer Kurvenfahrt. Es sollte insbesondere die Lenkbarkeit des Fahrzeugs und die Fahrstabilität während einer Kurvenfahrt verbessert werden. Die Verbesserung sollte aus Kostengründen ausschließlich durch Regelungseingriff, keineswegs durch zusätzliche Ventile oder dergleichen erreicht werden.

Es hat sich herausgestellt, daß diese Aufgabe mit dem in Anspruch 1 beschriebenen Verfahren zur Verbesserung des Regelverhaltens eines ABS gelöst werden kann, bei dem bei einer Kurvenfahrterkennung der für eine Geradeausfahrt gültige, auf Individualregelung aller Räder oder auf Individualregelung der Vorderräder in Verbindung mit einer Select-low-Regelung der Hinterräder ausgelegte Normal-Regelmodus in einen Kurvenfahrt-Regelmodus geändert wird, bei dem im Vergleich zu dem Normal-Regelmodus das mittlere Druckniveau des kurveninneren Vorderrades um einen vorgegebenen Wert abgesenkt und das mittlere Druckniveau des kurvenäußeren Vorderrades um einen vorgegebenen Wert angehoben werden. Im allgemeinen, wenn auch nicht in allen Fällen, sollte der Betrag der Absenkung am kurveninneren Rad dem Betrag der Anhebung am zweiten Rad dieser Achse entsprechen.

Der Erfindung liegt die Erkenntnis zugrunde, daß die gewünschte Verbesserung des Regelverhaltens, die gleichermaßen für eine Erhöhung der Lenkbarkeit und Fahrstabilität sowie für hohe Bremswirkung, d. h. für das Erreichen eines möglichst kurzen Bremsweges sorgt, durch Beachtung des Zusammenspiels der Längs- und der Seitenführungskräfte an allen Rädern zu erreichen ist. Eine radindividuelle Betrachtung der Längs- und Seitenführungskräfte führt nicht zum Ziel. Vielmehr wird erfindungsgemäß die Beeinflussung der Längs- und Seitenführungskräfte an den Rädern zum Aufbau eines untersteuernden Giermomentes ausgenützt, welches dem durch die Kurvenfahrt hervorgerufenen Übersteuern des Fahrzeugs entgegenwirkt. Dieses Übersteuern beruht darauf, daß die Fliehkraft - infolge zu niedriger Achslast bzw. infolge von Antriebseinflüssen und infolge des Bremsschlupfes - nicht mehr durch die Summe aller Seitenkräfte abgestützt werden kann. Erfindungsgemäß wird daher beim Erkennen einer Kurvenfahrt ein spezieller Regelmodus in Funktion gesetzt, der das mittlere Druckniveau an den kurveninneren und den kurvenäußeren Rädern - oder nur der Vorderräder - in der beschriebenen Weise korrigiert.

Nach einem vorteilhaften Ausführungsbeispiel des erfindungsgemäßen Verfahrens wird das Maß der Absenkung des mittleren Druckniveaus am kurveninneren Rad und/oder der Anhebung am kurvenäußeren Vorderrad in Abhängigkeit von der Drehzahldifferenz oder der Schlupfdifferenz der Hinterräder variiert bzw. vorgegeben.

Bei einem Fahrzeug mit Select-low-Regelung an der Hinterachse wird zweckmäßigerweise im Kurvenfahrt-Regelmodus das mittlere Druckniveau am kurveninneren Hinterrad abgesenkt und an dem kurvenäußeren Hinterrad angehoben. In diesem Falle tragen die Hinterräder ebenso wie die Vorderräder zum Aufbau eines das Übersteuern kompensierenden Giermomentes bei.

Ein besonders vorteilhaftes Verfahren zur Kurvenfahrterkennung besteht darin, daß die Radschlupfwerte der einzelnen Räder gefiltert und die gefilterten Werte miteinander verglichen werden und dann auf den Kurvenfahrt-Regelmodus umgeschaltet wird, wenn gleichzeitig der gefilterte Radschlupf an beiden Vorderrädern über einem vorgegebenen, von der momentanen Fahrzeuggeschwindigkeit oder Fahrzeugreferenzgeschwindigkeit abhängigen, Vorderrad-bezogenen Schlupf-Maximalwert und der gefilterte Radschlupf eines Hinterrades über einem vorgegebenen, von der Fahrzeug(referenz)geschwindigkeit abhängigen Schlupf-Maximalwert und der gefilterte Radschlupf des anderen Hinterrades unter einem vorgegebenen, von der Fahrzeugreferenzgeschwindigkeit abhängigen Schlupf-Minimalwert liegen, wobei zur Bestimmung der Kurvenrichtung das den niedrigeren Schlupfwert bzw. die höhere Geschwindigkeit aufweisende Hinterrad als das kurvenäußere Hinterrad gewertet wird.

Bei Verwendung von programmgesteuerten Schaltungen, wie Microprozessoren, Microcomputern und dergl. und von Filtern mit Tiefpaß-Charakteristik werden vorteilhafterweise die gefilterten Radschlupfsignale nach.der Beziehung

$$fws_{neu} = fws_{alt} + (fws_{alt} - fws_{neu}) / T$$

gebildet, wobei mit 'fws$_{neu}$' der im Arbeitstakt zuletzt ermittelte, mit 'fws$_{alt}$' der im Arbeitstakt zuvor ermittelte gefilterte Radschlupf und mit 'T' eine vorgegebene Zeitkonstante, die in einer Größenordnung zwischen 30 und 200 ms, insbesondere zwischen 50 und 100 ms, liegt, bezeichnet sind.

Ferner ist es erfindungsgemäß vorgesehen, im Kurvenfahrt-Regelmodus die Differenz der gefilterten Schlupfwerte der Hinterräder zu ermitteln und die das mittlere Druckniveau bestimmende Regelschwelle an dem kurveninneren Vorderrad nach der Beziehung

$$\Delta RS = k_1 . \Delta fws_{HA} + k_2 \ 1/a_{FZ}$$

anzuheben und an dem kurvenäußeren Rad abzusenken, wobei '$\Delta RS$' den Betrag der Schwellenänderung, '$\Delta fws_{HA}$' die Differenz der Schlupfwerte an den Hinterrädern, '$a_{FZ}$' die Fahrzeugbeschleunigung bedeuten und '$k_1, k_2$' Konstante sind.

Das erfindungsgemäße Verfahren wirkt sich auf die Schlupfregelung sowohl im Teilbremsbereich, d. h. bei Bremsvorgängen unterhalb der Blockierschwelle, und bei Blockierschutz-Regelbremsungen auf den Druckverlauf aus. Die Konstanten $k_1, k_2$ in der vorgenannten Beziehung, die für die Regelschwellen gilt, nehmen im Teilbremsbereich und im ABS-Bereich unterschiedliche Werte an. Die optimalen Werte für $k_1, k_2$ werden zweckmäßigerweise empirisch ermittelt.

Weitere Merkmale, Vorteile und Anwendungsmöglichkeiten der Erfindung gehen aus der folgenden Beschreibung von Ausführungsbeispielen anhand der beigefügten Abbildungen hervor.

Es zeigen

Fig. 1 im Blockschaltbild und in schematischer Vereinfachung die wesentlichen elektronischen Komponenten einer Schaltungsanordnung zur Durchführung des Verfahrens nach der Erfindung und

Fig. 2 ein Flow-Chart zur Veranschaulichung der Wirkungsweise der Schaltung nach Fig. 1 oder des Programmlauf 5 bei Verwendung einer programmgesteuerten Schaltung.

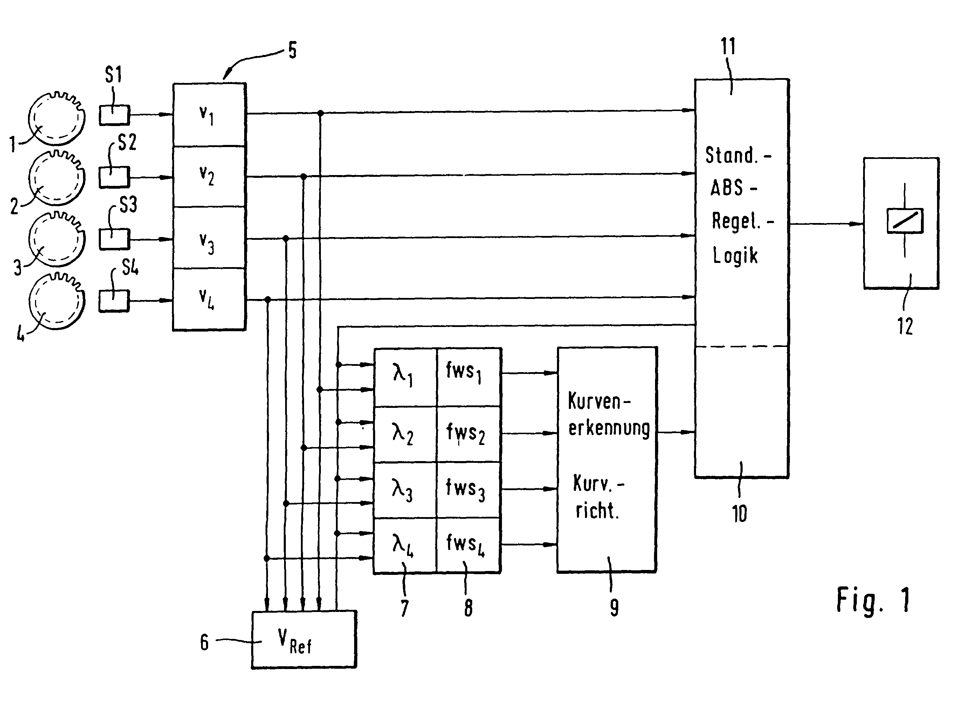

Die prinzipielle Arbeitsweise einer Schaltungsanordnung zur Blockierschutz- oder Bremsschlupfregelung ist in Fig. 1 wiedergegeben. Mit Hilfe von Meßwertgebern oder Zahnscheiben 1 bis 4, die mit den Fahrzeugrädern umlaufen, und mit Meßwertaufnehmern oder Radsensoren S1 bis S4 wird das Drehverhalten der einzelnen Fahrzeugräder gemessen. Im vorliegenden Beispiel wird eine Wechselspannung erzeugt, deren Frequenz der Radgeschwindigkeit entspricht.

Nach Aufbereitung der Sensorsignale in einer Schaltung 5 stehen die Radgeschwindigkeitssignale $v_1$ bis $v_4$ zur Verfügung. Durch logische Verknüpfung der Ausgangssignale der Schaltung 5, nämlich der Geschwindigkeitssignale $v_1$ bis $v_4$, in einer Verknüpfungsschaltung 6 wird in bekannter Weise eine Fahrzeugreferenzgeschwindigkeit $v_{Ref}$ gebildet, die u.a. als Bezugsgröße zur Bestimmung des Radschlupfes $\lambda_1$ bis $\lambda_4$ der einzelnen Fahrzeugräder und damit auch als Bezugsgröße zur Bremsdruckmodulation dient.

Ein Schaltungsblock 7 enthält die einzelnen Schaltkreise zum Ermitteln des Radschlupfes $\lambda_1...\lambda_4$ durch Vergleich der Fahrzeugreferenzgeschwindigkeit mit der jeweiligen Radgeschwindigkeit $v_1$ bis $v_4$. Der Radschlupf ergibt sich aus der Differenz

$$\lambda_i = v_{Ref} - v_i,$$

mit i = 1...4

Bei Verwendung einer programmgesteuerten Schaltung, z.B. eines Microcomputers, symbolisiert der Block 7 die Programmschritte zur Errechnung des Schlupfes $\lambda_i$ (i = 1...4) der einzelnen Fahrzeugräder.

Jedes Schlupfsignal passiert in einem Schaltblock 8 ein Filter mit Tiefpaß-Charakteristik, dessen Filterzeitkonstante in der Größenordnung von 50 bis 200 ms, z.B. 70 ms, liegt. Es wird ein gefiltertes Radschlupfsignal $fws_i$ gebildet. Für das gefilterte Signal $fws_i$ gilt allgemein

$$fws_i = \lambda_i \, (1 - e^{t/T}),$$

mit = 1...4

'T' ist die Zeitkontante des Filters.

Bei Verwendung eines digitalen Filters wird erfindungsgemäß das gefilterte Radschlupfsignal $fws_i$ nach der Beziehung

$$fws_{neu} = fws_{alt} + (fws_{alt} - fws_{neu})/T$$

errechnet. Natürlich wird auf diese Weise für jedes Rad individuell das gefilterte Radschlupfsignal ermittelt.

Die gefilterten Radschlupfsignale fwsi werden einer Auswerteschaltung 9 zugeführt und dort analysiert und verarbeitet. Die Kurvenfahrterkennung nach qualitativen und quantitativen Kriterien findet in der Schaltung 9 statt. Die Kurvenrichtung wird ebenfalls durch Auswertung und logische Verknüpfung der Schlupfsignale und Schlupfdifferenzsignale ermittelt. Das Ergebnis dieser Schlupfauswertung mit Hilfe der Schaltung 9 führt dann über eine Zusatzschaltung 10, nämlich einer Zusatzschaltung zu der eigentlichen Standard-ABS-Regelungslogik 11, zur Anpassung der Blockierschutz- oder Schlupfregelung an die besonderen Bedingungen infolge einer Kurvenfahrt.

Der Ausgang der Regelungslogik 11 führt über nicht dargestellte Aufbereitungs- und Auswerteschaltungen schließlich zu den Aktuatoren oder Modulatoren 12, mit denen der Bremsdruck einer Bremsanlage in der erforderlichen Weise beeinflußt wird. Im allgemeinen werden bei heutigen Antiblockiersystemen elektromagnetisch betätigbare Hydraulikventile, z.B. Mehrwegeventile, zur Modulation oder Steuerung des Bremsdruckes in den einzelnen Radbremsen einer hydraulischen Bremsanlage verwendet.

Die eigentliche ABS-Regelungslogik beruht natürlich ebenfalls auf der Auswertung der aufbereiteten Radgeschwindigkeitssignale $v_1$ bis $v_4$ unter Berücksichtigung der Fahrzeugreferenzgeschwindigkeit $v_{Ref}$.

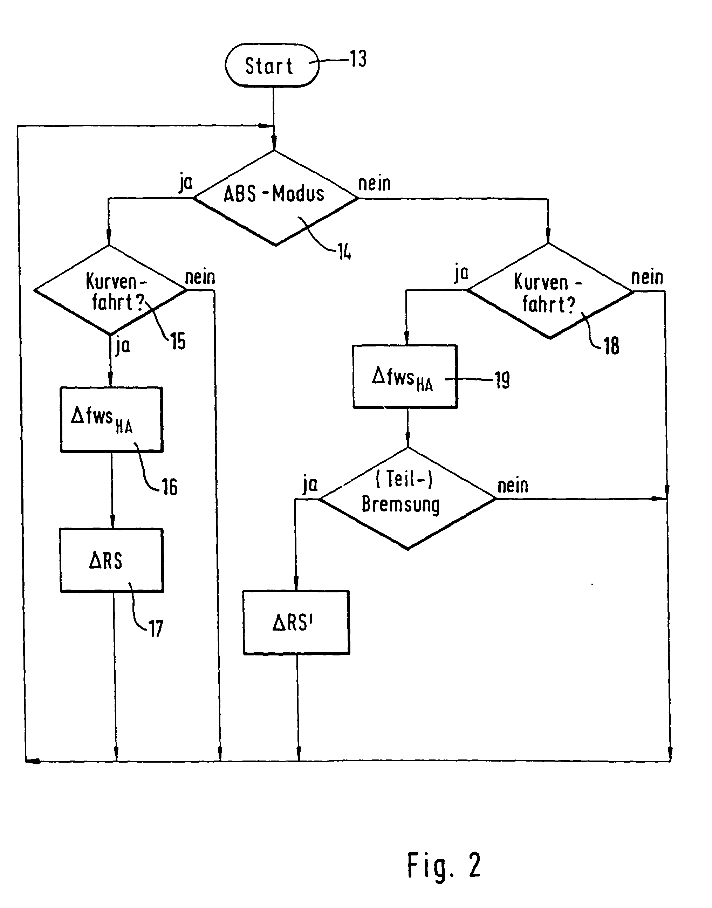

Die beschriebenen Funktionen der Schaltungsanordnung nach Fig. 1 lassen sich, wie bereits erwähnt wurde, durch programmgesteuerte Schaltungen, wie Microcomputer etc., realisieren. Derartige Reglertechnik wird heutzutage sogar bevorzugt. Einen Ausschnitt aus einem Flow-Chart oder Programmablaufplan, der die Verknüpfung der einzelnen Schritte des erfindungsgemäßen Verfahrens veranschaulicht, zeigt Fig. 2. Nach dem mit 13 symbolisierten 'START' des hier beschriebenen Programmabschnittes wird zunächst - symbolisiert durch eine Raute 14 - festgestellt, ob momentan ein ABS-Modus vorliegt oder ob momentan eine Teilbremsung (ABS-Modus: nein) abläuft.

Im ABS-Modus ist der weitere Programmlauf von der Entscheidung (15) abhängig, ob Kurvenfahrterkennung gegeben ist. Wenn ja, wird im Beispiel nach Fig. 2 durch ein Programmteil 16 die Schlupfdifferenz oder Geschwindigkeitsdifferenz der Hinterräder nach der Beziehung

$$\Delta fws_{HA} = |fws_{HL} - fws_{HR}|$$

errechnet. Anschließend erfolgt in einem Programmteil 17 eine Anhebung der Regelschwellen am kurvenäußeren Vorderrad und eine Absenkung der Schwelle am kurveninneren Vorderrad nach der Beziehung

$$\Delta RS = k_1 \cdot \Delta fws_{HA} + k_2 \, 1/a_{FZ}$$

wobei mit $\Delta RS$ die Änderung der Regelschwelle, mit $a_{FZ}$ die Fahrzeugbeschleunigung und mit $k_1, k_2$ Faktoren bezeichnet sind. Durch diese Schwellenanhebung bzw. -absenkung wird in der Kurve das Druckniveau am kurveninneren Vorderrad verringert und am kurvenäußeren Vorderrad erhöht. Das Maß der Absenkung bzw. Anhebung wird durch die Drehzahldifferenz oder Schlupfdifferenz der Hinterräder - ermittelt durch den Programmteil 16 - vorgegeben.

Das erfindungsgemäße Verfahren wirkt sich auch auf eine Teilbremsung aus, d.h. auf einen normalen Bremsvorgangs bei dem keine Blockiertendenz oder Rad-Instabilität auftritt.

Befindet sich das System nicht in einem ABS-Regelmodus, führt der Programmlauf in der Verzweigung 14 nach rechts. Durchfährt das Fahrzeug eine Kurve und wird dies von der Regelung erkannt (18), wird wiederum die Schlupfdifferenz $\Delta fws_{HA}$ der Hinterräder mit Hilfe eines Programmteils 19 ermittelt. Diese Schlupfdifferenz enthält eine Aussage über die Querbeschleunigung des Fahrzeugs.

Handelt es sich tatsächlich um einen Bremsvorgang, nämlich um eine Teilbremsung, so daß die entsprechende Frage (20) zu bejahen ist, werden auch in dieser Situation die Regelschwellen an den Vorderrädern variiert. Ebenso wie in dem zuvor beschriebenen ABS-Modus werden in dem Programmteil 21 Regelschwellen-Änderungen $\Delta RS'$ nach der Beziehung

$$\Delta RS' = k_1' \cdot \Delta fws_{HA} + k_2' \, 1/a_{FZ}$$

ermittelt. Für die Konstanten $k_1'$ und $k_2'$ gelten allerdings in diesem Falle, d.h. außerhalb einer ABS-Regelung, andere Werte als im ABS-Modus.

Die "Nein"-Ausgänge der Entscheidungsstellen 15,18 und 20 führen ebenso wie die Ausgangssignale nach Beendigung der Schwellenanhebung mit Hilfe der Programmteile 17 und 21 zurück zum Anfang der dargestellten Programmschleife. Im Arbeitstakt des Reglers werden folglich die beschriebenen Abfragen und Vorgänge wiederholt.

Durch das Verfahren nach der Erfindung wird also auf einfache Weise während einer Kurvenfahrt bzw. während einer Kurvenbremsung - sowohl im ABS-Modus als auch bei einer Teilbremsung - fahrzeugstabilisierend eingegriffen. Liegen die Kriterien für eine Kurvenfahrterkennung vor, wird durch Variieren der Regelschwellen bzw. Absenken des mittleren Druckniveaus an den kurveninneren Rädern oder an dem kurveninneren Vorderrad und Anhebung des Druckniveaus an den (dem) kurvenäußeren Vorderräder) (Vorderrad) ein stabilisierendes Giermoment aufgebracht. Da zu diesem Zweck der Bremsdruck an dem kurvenäußeren Rad bzw. an den kurvenäußeren Rädern, die durch die Kurvenfahrt höher belastet werden, erhöht wird, - die Bremsruckänderungstendenz also "richtig" ist -, wird gleichzeitig eine Erhöhung der Bremswirkung bzw. eine Verringerung des Bremsweges zusätzlich zu dem Stabilitätsgewinn erreicht; keinesfalls muß der Stabilitätsgewinn durch eine Bremswegverlängerung erkauft werden.

Die Kurvenfahrtsituation, die zu Querbeschleunigungen führt, wird erfindungsgemäß allein durch logische Verknüpfung und Auswertung der radindividuellen Schlupfwerte erzielt; auf kostspielige Querbeschleunigungssensoren und dergl. zur qualitativen und quantitativen Kurvenfahrterkennung wird verzichtet.

Bei einem Fahrzeug mit Heckantrieb, schwarz/weiß-Bremskreisaufteilung und 3-Kanal-ABS-Anlage ist im allgemeinen nur ein Ventilpaar (Einlaß- und Auslaßventil) zur Regelung des Hinterachs-Bremsdruckes vorgesehen. In einem solchen Fall wird erfindungsgemäß lediglich der Bremsdruck in den Vorderrädern bzw. das mittlere Bremsdruckniveau in den Vorderradbremsen in der beschriebenen Weise im Vergleich zu einer herkömmlichen ABS-Anlagen variiert. Das kurveninnere Vorderrad wird empfindlicher geregelt, das mittlere Druckniveau also herabgesetzt, während die Regelung am kurvenäußeren Vorderrad unempfindlicher wird.

Das Maß der Reduzierung und Anhebung ergibt sich, wie zuvor erläutert, aus der Differenz der Hinterradgeschwindigkeiten. Je größer die Differenz, um so höher muß das durch das erfindungsgemäße Verfahren hervorgerufene Giermoment werden, um die stabilisierende Wirkung zu erzielen bzw. um das durch die Kurvenfahrt hervorgerufene Übersteuern des Fahrzeugs zu kompensieren.

Durch die beschriebene Bremsdruckbeeinflussung ergeben sich an der Vorderachse unterschiedliche Längskräfte; am Kurvenaußenrad kommt zu der erhöhten Längskraft auch die reduzierte Seitenführungskraft hinzu. Das durch diese beiden Kraftkomponenten entstehende Giermoment (Drehmonment um die Hochachse) wirkt dem Übersteuern des Fahrzeugs entgegen und wirkt damit stabilisierend.

Bei Frontantriebsfahrzeugen mit diagonaler Bremskreisaufteilung sowie 3-Kanal-ABS-Anlage sind die Hinterradbremsen über separate Ventilpaare angeschlossen. In diesem Falle kann die Bremsdruckvariation nach dem erfindungsgemäßen Verfahren auch auf die Hinterräder ausgedehnt werden, so daß sowohl die Vorderräder als auch die Hinterräder einen Beitrag zur Stabilisierung während einer Kurvenfahrt bzw. zur Kompensierung des übersteuernden Verhaltens des Fahrzeugs leisten. Diese Verbesserung wird vorzugsweise dadurch erreicht, daß die im allgemeinen vorgesehene Regelung des Hinterachsdruckes nach dem Select-low-Kriterium zumindest teilweise aufgegeben und das mittlere Druckniveau am kurveninneren Hinterrad abgesenkt, am kurvenäußeren Hinterrad dagegen angehoben wird.

Bei Fahrzeugen mit Frontantrieb und diagonaler Bremskreisaufteilung sind die Möglichkeiten des stabilisierenden Eingriffs durch Änderung des Druckniveaus in den Vorderradbremsen wegen der Antriebseinflüsse etwas reduziert. Bei diesen Fahrzeugen gewinnt die beschriebene Änderung des Druckniveaus in den Hinterradbremsen zur Stabilisierung des Fahrzeugs während der Kurvenfahrt bzw. zur Kompensation der Übersteuerneigung an Bedeutung.

**Patentansprüche**

1.  Verfahren zur Verbesserung des Regelverhaltens eines Blockierschutzregelungssystems (ABS), insbesondere der Lenkbarkeit des Fahrzeugs und der Fahrstabilität während einer Kurvenfahrt, bei dem das Drehverhalten der Fahrzeugräder gemessen und zur Bestimmung einer Fahrzeugreferenzgeschwindigkeit, die als Bezugsgröße zur Ermittlung des Radschlupfes und zur Bremsdruckmodulation dient, ausgewertet wird, bei dem aus dem Radschlupf der einzelnen Räder Kriterien für eine Kurvenfahrterkennung und für die Erkennung der Richtung der Kurve abgeleitet werden und bei dem bei einer Kurvenfahrterkennung der für eine Geradeausfahrt gültige, auf Individualregelung aller Räder oder auf Individualregelung der Vorderräder in Verbindung mit einer Select-low-Regelung der Hinterräder ausgelegte Normal-Regelmodus in einen Kurvenfahrt-Regelmodus geändert wird, bei welchem im Vergleich zu dem Normal-Regelmodus durch Variieren der Regelschwellen das mittlere Druckniveau des kurveninneren Vorderrades abgesenkt wird, so daß es empfindlicher geregelt wird, und das mittlere Druckniveau des kurvenäußeren Vorderrades angehoben wird, so daß es unempfindlicher geregelt wird.

2.  Verfahren nach Anspruch 1, dadurch **gekennzeichnet,** daß das Maß der Absenkung des mittleren Druckniveaus am kurveninneren Vorderrad und/oder der Anhebung am kurvenäußeren Vorderrad in Abhängigkeit von der Drehzahldifferenz der Hinterräder variiert bzw. vorgegeben wird.

**3.** Verfahren nach Anspruch 1 oder 2, dadurch **gekennzeichnet,** daß bei einem Fahrzeug mit Select-low-Regelung an der Hinterachse im Kurvenfahrt-Regelmodus das mittlere Druckniveau an dem kurveninneren Hinterrad abgesenkt und an dem kurvenäußeren Hinterrad angehoben wird.

**4.** Verfahren nach einem oder mehreren der Ansprüche 1 bis 3, dadurch **gekennzeichnet,** daß zur Kurvenfahrterkennung die Radschlupfwerte ($\lambda_1...\lambda_4$) der einzelnen Räder gefiltert und die gefilterten Werte ($fws_1...fws_4$) miteinander verglichen werden sowie daß auf den Kurvenfahrt-Regelmodus umgeschaltet wird, wenn gleichzeitig der gefilterte Radschlupf ($fws_1,fws_2$) an beiden Vorderrädern über einem vorgegebenen, von der momentanen Fahrzeuggeschwindigkeit oder Fahrzeugreferenzgeschwindigkeit abhängigen (Vorderrad-bezogenen) Schlupf-Maximalwert ($S_{max\ HA}$), der gefilterte Radschlupf eines Hinterrades über einem vorgegebenen, von der Fahrzeug(referenz)geschwindigkeit abhängigen Schlupf-Maximalwert ($S_{max\ HA}$) und der gefilterte Radschlupf des anderen Hinterrades unter einem vorgegebenen, von der Fahrzeugreferenzgeschwindigkeit abhängigen Schlupf-Minimalwert ($S_{min\ HA}$) liegen, wobei zur Bestimmung der Kurvenrichtung das den niedrigeren Schlupfwert bzw. die höhere Geschwindigkeit aufweisende Hinterrad als das kurvenäußere Hinterrad gewertet wird.

**5.** Verfahren nach Anspruch 4, dadurch **gekennzeichnet,** daß für den Vorderrad-bezogenen Schlupfmaximalwert ($S_{max\ VA}$) ein Wert in der Größenordnung zwischen 3 und 10% der Fahrzeug(referenz)geschwindigkeit ($V_{Ref}$), für den Hinterrad-bezogenen Schlupfmaximalwert ($S_{max\ HA}$) ein Wert in der Größenordnung zwischen 2 und 5% der Fahrzeug(referenz)geschwindigkeit ($V_{Ref}$) und für den Hinterrad-bezogenen Schlupf-Minimalwert ($S_{min\ HA}$) ein Wert in der Größenordnung zwischen 0,5 und 2% der Fahrzeug(referenz)geschwindigkeit ($V_{Ref}$) vorgegeben werden.

**6.** Verfahren nach Anspruch 3 oder 4, dadurch **gekennzeichnet,** daß bei Verwendung von programmgesteuerten Schaltungen, wie Microprozessoren, Microcomputern, Microcontrollern etc., und Filtern mit Tiefpaß-Charakteristik die gefilterten Radschlupfsignale nach der Beziehung

$$fws_{neu} = fws_{alt} + (fws_{alt} - fws_{neu})/ T$$

gebildet werden, wobei mit '$fws_{neu}$' der im Arbeitstakt zuletzt ermittelte, mit '$fws_{alt}$' der im Arbeitstakt zuvor ermittelte, gefilterte Radschlupf und mit 'T' eine vorgegebene Zeitkonstante, die in einer Größenordnung zwischen 30 und 200 ms, insbesondere zwischen 50 und 100 ms, liegt, bezeichnet sind.

**7.** Verfahren nach einem oder mehreren der Ansprüche 1 bis 6, dadurch **gekennzeichnet,** daß im Kurvenfahrt-Regelmodus die Differenz ($\Delta fws$) der gefilterten Schlupfwerte der Hinterräder ermittelt und die das mittlere Druckniveau bestimmende Regelschwelle (RS) an dem kurveninneren Vorderrad nach der Beziehung

$$\Delta RS = k_1 \cdot \Delta fws_{HA} + k_2\ 1/a_{FZ}$$

angehoben und an dem kurvenäußeren Rad abgesenkt wird, wobei '$\Delta RS$' dem Betrag der Schwellenänderung, '$\Delta fws_{HA}$' die Differenz der Schlupfwerte an den Hinterrädern, '$a_{FZ}$' die Fahrzeugbeschleunigung bedeuten und '$k_1,k_2$' Konstante sind.

**8.** Verfahren nach Anspruch 7, dadurch **gekennzeichnet,** daß für die Konstanten ($k_1,k_2$) im Teilbremsbereich andere Werte als im ABS-Regelbereich vorgegeben werden.

**Claims**

**1.** Method of improving the control behavior of an antilock control system (ABS), more particularly, the steerability of a vehicle and its drivability during cornering, wherein the rotational behavior of the vehicle wheels is measured and evaluated to determine a vehicle reference speed which is used as a reference value for ascertaining the wheel slip and for braking pressure modulation, wherein criteria for cornering identification and for identification of the direction of cornering are derived from the wheel slip of the individual wheels, and wherein when cornering is identified the normal control mode which is intended for straight travel and is configured for an individual control of all wheels or an individual control of the front wheels in conjunction with a select-low control of the rear wheels is changed to a cornering control mode, wherein in comparison to the normal control mode, the average pressure level of the curve-inward front wheel is decreased by variation of the control thresholds so that the wheel is controlled more precisely, and the average pressure level of the curve-outward front wheel is increased so that the wheel is controlled less precisely.

**2.** Method as claimed in claim 1,

**characterized** in that the amount of decrease of the average pressure level on the curve-inward front wheel and/or the increase on the curve-outward front wheel is varied or predetermined as a function of the rotational speed difference of the rear wheels.

3. Method as claimed in claim 1 or claim 2, **characterized** in that in a vehicle with a select-low control on the rear axle, the average pressure level is decreased on the curve-inward rear wheel and increased on the curve-outward rear wheel in the cornering control mode.

4. Method as claimed in any one or more of claims 1 to 3, **characterized** in that for cornering identification, the wheel slip values ($\lambda_1...\lambda_4$) of the individual wheels are filtered and the filtered values ($fws_1...fws_4$) are compared, and in that switch-over to the cornering control mode is effected when simultaneously the filtered wheel slip ($fws_1$, $fws_2$) on the two front wheels is in excess of a predetermined (front-wheel-related) maximum slip value ($S_{max\,VA}$) that is responsive to the instantaneous vehicle speed or vehicle reference speed, the filtered wheel slip of one rear wheel is above a predetermined maximum slip value ($S_{max\,HA}$) that is responsive to the vehicle (reference) speed, and the filtered wheel slip of the other rear wheel is below a predetermined minimum slip value ($S_{min\,HA}$) that is responsive to the vehicle reference speed, and the rear wheel having the lower slip value or the higher speed, respectively, is assessed as the curve-outward rear wheel to determine the direction of cornering.

5. Method as claimed in claim 4, **characterized** in that a value in the order between 3 and 10 % of the vehicle (reference) speed ($V_{Ref}$) is predetermined for the front-wheel-related maximum slip value ($S_{max\,VA}$), a value in the order between 2 and 5 % of the vehicle (reference) speed ($V_{Ref}$) is predetermined for the rear-wheel-related maximum slip value ($S_{max\,HA}$), and a value in the order between 0.5 and 2 % of the vehicle (reference) speed ($V_{Ref}$) is predetermined for the rear-wheel-related minimum slip value ($S_{min\,HA}$).

6. Method as claimed in claim 3 or claim 4, **characterized** in that when programmed circuitries, such as microprocessors, microcomputers, microcontrollers, etc., and filters with a low-pass characteristic are used, the filtered wheel slip signals are produced according to the relation

$$fws_{neu} = fws_{alt} + (fws_{alt} - fws_{neu}) / T$$

and '$fws_{neu}$' refers to the filtered wheel slip which was the last one ascertained in the working cycle and '$fws_{alt}$' refers to the previously ascertained filtered wheel slip, and 'T' implies a predetermined time constant which ranges in the order between 30 and 200 msec, more particularly, between 50 and 100 msec.

7. Method as claimed in any one or more of claims 1 to 6, **characterized** in that the difference ($\Delta fws$) of the filtered slip values of the rear wheels is determined in the cornering control mode, and the control threshold (RS) which defines the average pressure level is increased on the curve-inward front wheel according to the relation

$$\Delta RS = k_1 \cdot \Delta fws_{HA} + k_2 \; 1/a_{FZ,}$$

and decreased on the curve-outward wheel, and '$\Delta RS$' implies the amount of the threshold variation, '$\Delta fws_{HA}$' refers to the difference of the slip values on the rear wheels, '$a_{FZ}$' implies the vehicle acceleration, and '$k_1$, $k_2$' are constants.

8. Method as claimed in claim 7, **characterized** in that the constants ($k_1$, $k_2$) adopt different predetermined values in the partial braking range and in the ABS control range.

**Revendications**

1. Procédé d'amélioration du comportement de régulation d'une régulation antiblocage (ABS), notamment de la maniabilité en direction du véhicule et de la stabilité de conduite pendant une conduite en virage, selon lequel le comportement de rotation des roues du véhicule est mesuré et est analysé pour déterminer une vitesse de référence de véhicule, qui sert de grandeur de référence pour déterminer le glissement de roue et pour moduler la pression de frein, selon lequel, à partir du glissement des différentes roues, des critères sont déduits pour une reconnaissance de conduite en virage et pour constater le sens du virage, et selon lequel, lors d'une reconnaissance de conduite en virage, le mode normal de régulation, valable pour une conduite en ligne droite et conçu pour une régulation individuelle de toutes les roues ou pour une régulation individuelle des roues avant en combinaison avec une régulation à sélection basse des roues arrière, est remplacé par un mode de régulation de conduite en virage dans lequel, en comparaison du mode normal de régulation, au moyen d'une variation des seuils de régulation, le niveau moyen de pression de la roue avant intérieure au virage est abaissé, de sorte qu'il fait l'objet d'une régulation sensible, et le niveau moyen de pression de la roue avant extérieure au virage est relevé, de sorte qu'il fait l'objet d'une régulation qui n'est pas sensible.

2.  Procédé suivant la revendication 1, caractérisé en ce que les valeurs de l'abaissement du niveau moyen de pression sur la roue avant intérieure au virage et/ou du relèvement sur la roue avant extérieure au virage font l'objet d'une variation ou sont préfixées en fonction de la différence de vitesse de rotation des roues arrière.

3.  Procédé suivant la revendication 1 ou 2, caractérisé en ce que, dans le cas d'un véhicule à régulation à sélection basse sur l'essieu arrière, dans le mode de régulation de conduite en virage, le niveau moyen de pression sur la roue arrière intérieure au virage est abaissé et le niveau sur la roue arrière extérieure au virage est relevé.

4.  Procédé suivant une ou plusieurs des revendications 1 à 3, caractérisé en ce que, pour la reconnaissance de conduite en virage, les valeurs de glissement de roue ($\lambda_1 ... \lambda_4$) des différentes roues sont filtrées et les valeurs filtrées ($fws_1 ... fws_4$) sont comparées les unes aux autres, et en ce qu'il est procédé à une commutation sur le mode de régulation de conduite en virage lorsqu'en même temps, les glissements de roue filtrés ($fws_1$, $fws_2$) sur les deux roues avant sont supérieurs à une valeur maximale de glissement ($S_{max\ VA}$) préfixée (rapportée aux roues avant) qui dépend de la vitesse du véhicule ou vitesse de référence de véhicule, momentanée, le glissement de roue filtré d'une roue arrière est supérieur à une valeur maximale de glissement ($S_{max\ HA}$) préfixée qui dépend de la vitesse (de référence) de véhicule et le glissement de roue filtré de l'autre roue arrière est inférieur à une valeur minimale de glissement ($S_{min\ HA}$) préfixée qui dépend de la vitesse de référence de véhicule, tandis que la roue arrière présentant la valeur de glissement plus faible ou la vitesse plus élevée est analysée en tant que roue arrière extérieure au virage pour la détermination du sens du virage.

5.  Procédé suivant la revendication 4, caractérisé en ce qu'une valeur approximativement comprise entre 3 et 10% de la vitesse (de référence) de véhicule ($v_{Ref}$) est préfixée pour la valeur maximale de glissement ($S_{max\ VA}$) rapportée aux roues avant, une valeur approximativement comprise entre 2 et 5% de la vitesse (de référence) de véhicule ($v_{Ref}$) est préfixée pour la valeur maximale de glissement ($S_{max\ HA}$) rapportée aux roues arrière et une valeur approximativement comprise entre 0,5 et 2% de la vitesse (de référence) de véhicule ($v_{Ref}$) est préfixée pour la valeur minimale de glissement ($S_{min\ HA}$) rapportée aux roues arrière.

6.  Procédé suivant la revendication 3 ou 4, caractérisé en ce que, dans le cas de l'utilisation de circuits commandés par programme, tels que microprocesseurs, micro-ordinateurs, microcontrôleurs, etc. et d'un filtrage avec une caractéristique passe-bas, les signaux de glissement de roue filtrés sont formés conformément à la relation

$$fws_{neu} = fws_{alt} = (fws_{alt} - fws_{neu}) / T,$$

«$fws_{neu}$» désignant le glissement de roue filtré déterminé en dernier dans le cycle de travail, «$fws_{alt}$» le glissement de roue filtré déterminé précédemment dans le cycle de travail et «T» une constante de temps préfixée qui est approximativement comprise entre 30 et 200 ms, notamment entre 50 et 100 ms.

7.  Procédé suivant une ou plusieurs des revendications 1 à 6, caractérisé en ce que, dans le mode de régulation de conduite en virage, la différence ($\Delta fws$) des valeurs de glissement filtrées des roues arrière est déterminé et le seuil de régulation (RS), déterminant le niveau moyen de pression, est relevé sur la roue avant intérieure au virage et est abaissé sur la roue extérieure au virage, conformément à la relation

$$\Delta RS = k_1 . \Delta fws_{HA} + k_2\ 1/a_{FZ},$$

«$\Delta RS$» désignant la valeur de la variation de seuil, «$\Delta fws_{HA}$» la différence des valeurs de glissement sur les roues arrière et «$a_{FZ}$» l'accélération du véhicule et «$k_1$, $k_2$» étant des constantes.

8.  Procédé suivant la revendication 7, caractérisé en ce que, dans le domaine de freinage partiel, d'autres valeurs que dans le domaine de régulation ABS sont préfixées pour les constantes ($k_1$, $k_2$).

EP 0 832 017 B1

Fig. 1

Fig. 2